**Europäisches Patentamt**

**European Patent Office**

**Office européen des brevets**

(19)

(11) **EP 1 391 258 A1**

(12) **EUROPÄISCHE PATENTANMELDUNG**

| | |
|---|---|
| (43) Veröffentlichungstag:<br>**25.02.2004 Patentblatt 2004/09** | (51) Int Cl.7: **B22D 11/111**, C21C 7/076 |

(21) Anmeldenummer: **03016365.3**

(22) Anmeldetag: **19.07.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **14.08.2002 DE 10237151**

(71) Anmelder: **ThyssenKrupp Nirosta GmbH**
**47807 Krefeld (DE)**

(72) Erfinder:
• **Stebner, Guido, Dr.-Ing**
**45359 Essen (DE)**

• **Walter, Manfred, Dr.-Ing.**
**47804 Krefeld (DE)**
• **Mankau, Wilhelm, Dipl.-Ing.**
**41372 Niederkrüchten (DE)**
• **Stolz, Joachim**
**47669 Wachtendonk (DE)**

(74) Vertreter: **COHAUSZ & FLORACK**
**Patent- und Rechtsanwälte**
**Bleichstrasse 14**
**40211 Düsseldorf (DE)**

(54) **Verfahren zum Vergiessen einer Stahlschmelze**

(57) Die vorliegende Erfindung betrifft ein Verfahren zum Vergießen einer Stahlschmelze (S), bei dem die Stahlschmelze (S) in ein Verteilergefäß (1) eingegossen wird, und bei dem auf der Stahlschmelze (S) nach dem Eingießen eine Schlacke (K) erzeugt wird, die eine schmelzflüssige Schlackenlage (Ks) umfasst, die aus einem bei niedriger Temperatur schmelzenden, im Wesentlichen MgO-freien Schlackenbildnermaterial gebildet ist. Durch das erfindungsgemäße Verfahren zum Gießen von gegossenen Bändern, Dünnbrammen oder Brammen lässt sich die Anzahl der oxidischen Einschlüsse des jeweiligen Produkts deutlich reduzieren. Darüber hinaus wird ein Mittel angegeben, durch dessen Verwendung sich die Anzahl oxidischer Einschlüsse deutlich reduzieren lässt.

EP 1 391 258 A1

**Beschreibung**

Die Erfindung betrifft ein Verfahren zum Vergießen einer Stahlschmelze, insbesondere zum Vergießen von Stahlschmelze in einer Bandgießanlage.

Beim Vergießen von Metallschmelze zu Brammen, Dünnbrammen oder gegossenem Band wird die Metallschmelze üblicherweise aus der Gießpfanne zunächst über ein so genanntes "Schattenrohr" in eine Verteilerrinne, auch "Tundish" genannt, gegossen. Beim konventionellen Brammen- oder Strangguss wird die Schmelze dann aus der Verteilerrinne auf die Gießkokillen verteilt.

Eine Möglichkeit, die Schmelze direkt zu einem Band zu vergießen, besteht darin, die Schmelze über die Verteilerrinne in einen zwischen den gegenläufig rotierenden Gießwalzen einer Zweirollen-Gießmaschine ausgebildeten Gießspalt zu gießen. Zwischen den Rollen der Gießmaschine ist ein Gießspalt ausgebildet.

In einer solchen Maschine wird beim Gießen des Bandes der Zufluss von Schmelze so reguliert, dass sich oberhalb des Gießspalts ein Schmelzenbad sammelt, der so genannte "Schmelzenpool". Die von ihm auf die Umfangsfläche der Gießrollen gelangende Schmelze erstarrt dort und bildet Schalen, die bei ihrem Durchtritt durch den Gießspalt gegeneinander gepresst werden, so dass ein gegossenes Band von fester Gestalt den Gießspalt verlässt.

Es zeigt sich jedoch, dass es insbesondere beim Vergießen von Stahlschmelze zu gegossenem Band zu erheblichen Störungen der Materialbeschaffenheit des gegossenen Bandes in Form von nicht metallischen oxidischen Einschlüssen kommt. Ähnliche Phänomene treten bei der Erzeugung von Dünnbrammen auf und führen dort ebenfalls zu einer Verminderung der Qualität des aus dem gegossenen Produkt erzeugten Materials.

Es ist vorgeschlagen worden, die sich beim Vergießen von Stahl bildenden, in der Fachsprache auch als "scums" bezeichneten oxidischen Einschlüsse dadurch zu vermeiden, dass der Bereich des Schmelzenpools eingehaust und in die Einhausung ein nicht oxidierendes Gas geblasen wird. Auf diese Weise soll das Gießen unter weitestgehendem Sauerstoffabschluss durchgeführt werden (JP 05261488 A).

Aus dem Bereich des Dünnbrammengießens ist es darüber hinaus bekannt, die in einen "Tundish" eingegossene Stahlschmelze mit einer Schlacke abzudecken, die zu mindestens 90 % aus CaO, MgO, CaF$_2$, Cr$_2$O$_3$, Li$_2$O und/oder Al$_2$O$_3$ zusammengesetzt ist. Auch auf diese Weise soll sich die Anzahl der am fertigen Produkt feststellbaren "Scums" vermindern (JP20000246402A).

In der Praxis zeigt sich jedoch, dass diese Maßnahmen nicht zu einer deutlichen Reduzierung der Bildung von Einschlüssen führen. So haben praktische Gießversuche ergeben, dass sich die Anzahl der Einschlüsse pro Flächeneinheit ausgehend von einem hohen Level am Anfang des gegossenen Bandes zu dessen Ende hin zwar vermindert, dass diese Abnahme jedoch nicht so groß ist, dass damit eine über die Gesamtlänge gesehen akzeptable Anzahl von Oberflächeneinschlüssen vorhanden ist.

So sind insbesondere im Bereich des Bandanfangs bei in konventioneller Weise gegossenen Bändern Mengen an Einschlüssen festzustellen, die so groß sind, dass die Bandanfangsabschnitte vielfach nicht verwendbar sind.

Die Aufgabe der Erfindung besteht darin, ein Verfahren zum Gießen von gegossenen Bändern, Dünnbrammen oder Brammen zu schaffen, mit dem sich die Anzahl der oxidischen Einschlüsse des jeweiligen Produkts deutlich reduzieren lassen. Darüber soll ein Mittel angegeben werden, durch dessen Verwendung sich die Anzahl oxidischer Einschlüsse deutlich reduzieren lässt.

In Bezug auf das Verfahren zum Vergießen einer Stahlschmelze wird diese Aufgabe dadurch gelöst, dass die Stahlschmelze in an sich bekannter Weise ein Verteilergefäß eingegossen wird, und dass anschließend erfindungsgemäß auf der Stahlschmelze nach deren Eingießen in das Verteilergefäß eine Schlacke erzeugt wird, die eine schmelzflüssige Schlackenlage umfasst, die aus einem bei niedriger Temperatur schmelzenden, im Wesentlichen MgO-freien Schlackenbildnermaterial gebildet ist.

Die Erfindung geht von der Erkenntnis aus, dass die wesentliche Ursache für die Entstehung von Oxideinschlüssen in der Reaktion des Magnesiumoxids (MgO) mit dem jeweils verarbeiteten Stahl besteht. Wie voranstehend schon erwähnt, wird dieses Feuerfestmaterial MgO üblicherweise als Schlackebildner und zur Ausmauerung des Tundish's eingesetzt, so dass MgO in großen Mengen in dem Verteilergefäß vorhanden ist. Es hat sich herausgestellt, das speziell Magnesiumoxid mit dem Stahl nicht metallische Reaktionsprodukte bildet, die am fertigen Produkt als die Qualität störende oxidische Einschlüsse festgestellt werden können.

Indem die Erfinder vorgeschlagen haben, die Anwesenheit von MgO in der auf den flüssigen Stahl im Tundish aufgebrachten Schlacke weitestgehend zu minimieren, also vorzugsweise soweit zu reduzieren, dass es möglichst nicht mehr vorhanden ist, und indem sie statt dessen schlackenbildende Materialien zum Abdecken der Schmelze vorgeschrieben haben, die schon bei relativ niedrigen Temperaturen schmelzen, ist sichergestellt, dass aus den Schlackebildnern selbst kein zusätzlicher Sauerstoff in störenden Mengen in die Stahlschmelze gelangen kann. Zudem schottet die Stahlschmelze durch die auf ihr schwimmende schmelzflüssige Schlackenschicht dicht gegenüber dem Umgebungssauerstoff ab. Versuche haben erwiesen, dass sich schon durch diese Maßnahme gegossene Zwischenprodukte, wie Bänder, Dünnbrammen oder Brammen erzeugen lassen, bei denen die Anzahl der unerwünschten oxidischen Einschlüsse deutlich reduziert ist.

Als für diesen Zweck besonders geeignetes Schlackenbildnermaterial wird erfindungsgemäß CaO und $Al_2O_3$ als Mischung oder jeweils alleine verwendet. Ein derart zusammengesetztes Schlackemittel weist eine relativ niedrige Schmelztemperatur auf, so dass es schmelzflüssig wird, wenn es mit dem flüssigen Stahl in Berührung kommt. Auf diese Weise wird eine gute Isolierung der Stahlschmelze gegenüber dem Sauerstoff der Umgebung erreicht und der Reoxidation des Stahls sicher vorgebeugt.

Eine vorteilhafte Weiterbildung des erfindungsgemäßen Verfahrens besteht darin, dass die Schlacke mehrlagig aufgebaut ist, wobei die untere, mit der Schmelze direkt in Kontakt kommende Schicht durch die schmelzflüssige Schlackenlage gebildet ist und auf der schmelzflüssigen eine Isolierlage der Schlacke erzeugt wird, indem auf die schmelzflüssige Schlackenlage ein wärmedämmendes Material aufgebracht wird. Als Material für die wärmedämmende Isolierlage kann beispielsweise Reisasche ("rice husk") verwendet werden. Durch die Isolierlage werden die andernfalls unvermeidlich auftretenden, über die schmelzflüssige Schlackenlage abgehenden Wärmeverluste der Schmelze deutlich reduziert, so dass eine einwandfreie Vergießbarkeit des Stahls im Dauerbetrieb gewährleistet ist.

Die Möglichkeit eines Kontaktes der in das Verteilergefäß eingefüllten Stahlschmelze mit in der Umgebung vorhandenem Sauerstoff kann dadurch weiter reduziert werden, dass im freien Raum oberhalb der Schlacke eine $O_2$-reduzierende Atmosphäre erzeugt wird, die während des Abströmens der Stahlschmelze aus dem Verteilergefäß aufrechterhalten wird. Diese reduzierende Atmosphäre lässt sich beispielsweise dadurch herstellen, dass ein Material auf die schmelzflüssige Schlackenlage bzw. die Isolierlage aufgebracht wird, welches infolge der Erwärmung ein reduzierendes Gas freisetzt. Dazu geeignetes Material sind beispielsweise hochkohlenstoffhaltige Materialien, wie Graphit. Alternativ oder zusätzlich kann in den in den freien Raum oberhalb der Schlacke ein $O_2$-reduzierendes Gas geleitet wird. Bei diesem Gas kann es sich beispielsweise um $CH_4$ und / oder $H_2$ handeln. Der in das Verteilergefäß gelangende Sauerstoff verbrennt mit den in den Raum über der Schlacke eingeblasenen oder aus der obersten Schlackenschicht freigesetzten reduzierenden Gasen, so dass er von der Stahlschmelze nicht mehr aufgenommen werden kann.

Eine weitere, der Vermeidung einer Reoxidation des Stahls dienende, die Erfindung vorteilhaft ergänzende Ausgestaltung besteht darin, dass in den freien Raum oberhalb der Schlacke ein inertes Gas geleitet wird. Die Funktion dieses interten Gases, beispielsweise Argon, besteht darin, den in dem betreffenden Raum enthaltenen Sauerstoff zu verdrängen, bevor er mit der Stahlschmelze überhaupt in Kontakt kommen kann.

Nachfolgend wird die Erfindung anhand eines Ausführungsbeispiels näher erläutert.

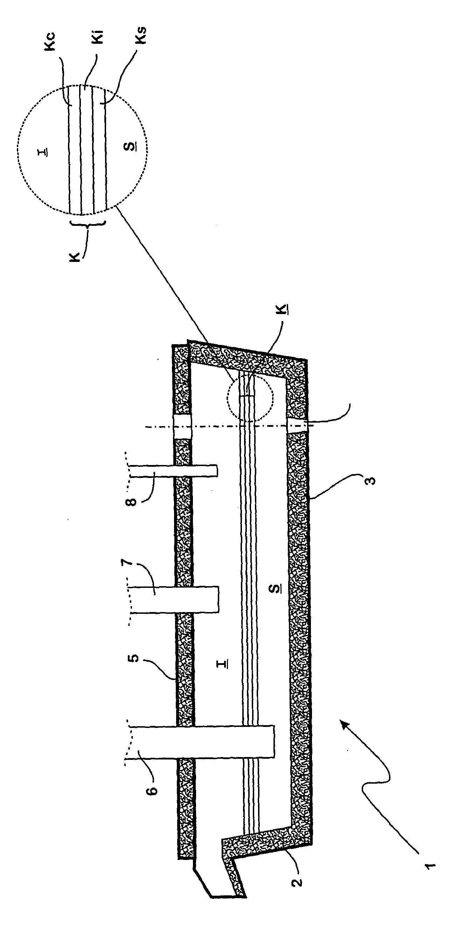

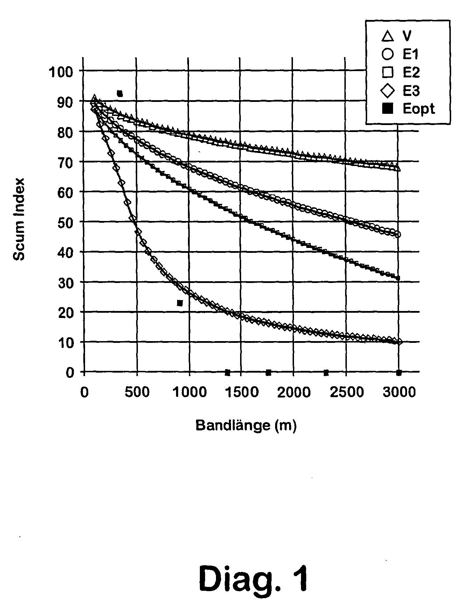

Die einzige Figur zeigt eine Verteilerrinne 1, die Teil einer Vorrichtung zum Vergießen von Stahlschmelze ist. Eine solche Verteilerrinne 1 wird beispielsweise in einer Zweirollengießmaschine zum Erzeugen von gegossenem Stahlband eingesetzt.

Die äußeren Seitenwände und der Boden der trogartig, nach oben offen ausgebildeten Verteilerrinne 1 sind durch miteinander verschweißte Stahlplatten gebildet, die auf ihrer dem Innenraum I der Verteilerrinne 1 zugeordneten Seite mit einem Feuerfestmaterial 2 bedeckt sind. In einem der einen kurzen Seite der Verteilerrinne 1 zugeordneten Abschnitt des Bodens 3 und des darüber angeordneten Feuerfestmaterials 2 der Verteilerrinne 1 ist eine Abströmöffnung 4 eingeformt.

In die Abströmöffnung 4 kann ein nicht dargestellter Stopfen eingesetzt werden, der an einer ebenfalls nicht gezeigten, heb- und senkbaren Stopfenstange befestigt ist. Durch Anheben bzw. Absenken der Stopfenstange wird die Abströmöffnung mehr oder weniger frei gegeben und so der Abfluss von Schmelze aus der Verteilerrinne 1 reguliert.

Auf den oberen Rand der Verteilerrinne 1 ist ein Deckel 5 aufgelegt, der den Innenraum I gegenüber der Umgebung abschottet. Der Deckel 5 weist eine erste Durchführung auf, durch die ein Schattenrohr 6 geführt ist. Über das Schattenrohr 6 ist eine Stahlschmelze S in die Verteilerrinne 1 gefüllt.

Zusätzlich weist der Deckel 5 eine Durchführung für eine Leitung 7 auf, über die verschiedene zur Ausbildung einer auf der schmelzflüssige Stahlschmelze S schwimmenden Schlacke K in den Innenraum I der Verteilerrinne 1 geleitet werden können. Zu diesem Zweck ist die Leitung 7 mit einer nicht dargestellten Einrichtung zum Zugeben eines pulverförmigen Schlackebildnermaterials verbunden, das aus einem MgO-freien Gemisch aus CaO und $Al_2O_3$ gebildet ist. Zu Versuchszwecken kann darüber hinaus ein konventioneller, MgO-enthaltender Schlackenbildner über die Leitung 7 auf die in der Verteilerrinne 1 enthaltene Stahlschmelze S gegeben werden.

Des Weiteren ist die Leitung 7 mit einer Einrichtung zum Zugeben von schüttfähigen Isoliermaterialien verbunden, die beispielsweise in Form von Reisasche vorliegen können. Schließlich ist an die Leitung 7 noch eine Einrichtung zum Zugeben von kohlenstoffhaltigen Materialien, wie Graphit, angeschlossen. Selbstverständlich kann die Zugabe der betreffenden Materialien auch jeweils über eine separate Leitung erfolgen.

Durch eine dritte Durchführung des Deckels 5 ist eine Gasversorgungsleitung 8 geführt. Über die Gasversorgungsleitung 8 kann der Innenraum I der Verteilerrinne mit einem reduzierenden Gas, beispielsweise $CH_4$ oder $H_2$, gespült werden. Ebenso kann durch die Gasversorgungsleitung 8 ein inertes Gas, beispielsweise Argon, in den Innenraum I geleitet werden.

Bei einem ersten zum Nachweis der im Stand der Technik gegebenen Verhältnis ist ein Betriebsversuch V durchgeführt worden. Bei diesem Versuch V ist über das Schattenrohr 6 Stahlschmelze in den Innenraum I geleitet worden. Da es sich um einen Vergleichsversuch handelte, ist nach dem Eingießen der Stahlschmelze S in die Verteilerrinne 1 über die Leitung 7 konventionelles, MgO-enthaltendes Schlackepulver auf die Stahlschmelze S aufgegeben worden. Die Stahlschmelze S ist dann in einer weiter nicht dargestellten Zweirollengießmaschine zu gegossenem Band verarbeitet worden, welches dann in einem kontinuierlich sich anschließenden Arbeitsgang eine Warmbandwalzung durchlaufen hat.

Für das nach dem Abgießen der Stahlschmelze S zu einem gegossenen Band und nach der sich daran anschließenden Warmwalzung erhaltene Warmband ist der so genannte "Scum-Index" bestimmt worden. Dazu sind für jedes der in dem Betriebsversuch V hergestellten Coils ausgehend vom Bandanfang für Längenabschnitte von jeweils 20 Metern diejenigen Längsabschnitte bestimmt worden, in denen unerwünschte Oxideinschlüsse ("Scums") aufgetreten sind. Die Summe der auf diese Weise ermittelten Scums aufweisenden Abschnitte ist dann ins Verhältnis gesetzt worden zur Gesamtzahl der im jeweiligen Längsabschnitt untersuchten Coils. Der "Scum-Index" berechnet somit wie folgt:

$$\text{Scum-Index} = \frac{\text{Anzahl derjenigen Coils mit Oxideinschlüssen im untersuchten Längenabschnitt}}{\text{Anzahl aller im jeweiligen Längenabschnitt untersuchten Coils}}$$

In einem zweiten, der erfindungsgemäßen Vorgehensweise folgenden Betriebsversuch E1 ist zum Nachweis der durch Verwendung einer erfindungsgemäßen Schlacke erzielten Verminderung der Oxideinschlüsse Stahlschmelze S anstelle MgO-haltigen Schlackenbildnern ein pulverförmiges, Schlacke bildendes Material auf die Stahlschmelze S gegeben worden, das kein Magnesiumoxid enthielt, sondern aus einem Gemisch aus Kalziumoxid und Aluminiumoxid bestand. Beim Auftreffen auf die Stahlschmelze S ist das Schlackematerial geschmolzen. Nach Zugabe einer ausreichenden Menge bildet das Schlackenbildnermaterial eine schmelzflüssige Schlackenlage Ks, durch die Stahlschmelze S dicht gegenüber der im Innenraum I herrschenden Atmosphäre abgedeckt ist. Zusätzlich ist eine Isolierschicht Ki auf die schmelzflüssige Schlackenlage Ks aufgetragen worden, indem über die Leitung 7 oder eine andere Zuführleitung ein wärmedämmendes Isoliermaterial in die Verteilerrinne 1 eingebracht worden ist.

Durch die Isolierlage Ki ist der Temperaturverlust der Stahlschmelze minimiert worden, so dass über den gesamten Betriebsversuch eine für ein optimales Gießergebnis ausreichende Temperatur der Stahlschmelze S gewährleistet war.

Die Stahlschmelze S ist dann ebenfalls in einer weiter nicht dargestellten Zweirollengießmaschine kontinuierlich zu gegossenem Band vergossen und zu Warmband warmgewalzt worden. Für die auf diese Weise erhaltenen Coils sind ebenfalls die Scum-Indizes bestimmt worden.

In einem drittem Betriebsversuch E2 ist ergänzend zu der Schlackenlage Ks und der Isolierlage Ki in erfindungsgemäßer Weise eine auf der Isolierlage Ki aufliegende, einen hohen Kohlenstoffgehalt aufweisen Lage Kc auf die Stahlschmelze S aufgetragen worden. Infolge der hohen Temperatur in der Verteilerrinne 1 hat die Lage Kc Kohlenstoff freigesetzt, der mit dem im Innenraum I enthaltenen Sauerstoff verbrannt ist. Auf diese Weise konnte der Sauerstoffgehalt im Innenraum I deutlich reduziert werden. Nach dem Vergießen zu gegossenem Band und einem sich kontinuierlich anschließenden Warmwalzen sind für die erhaltenen Warmbänder die Scum-Indizes bestimmt worden.

Schließlich ist in einem vierten Betriebsversuch E3 zusätzlich zu den im dritten Versuch E2 vorgenommenen Maßnahmen Argon in die Verteilerrinne 1 eingeblasen worden, das die im Innenraum I enthaltene Luft verdrängt hat. Durch diese Maßnahme und die aus der Lage Kc austretenden reduzierenden Gase ist eine im Wesentlichen vollständig sauerstofffreie Atmosphäre in der Verteilerrinne 1 geschaffen, durch die eine Reoxidation der Stahlschmelze S sicher unterbunden worden ist. Infolgedessen konnte ein Warmband erzeugt werden, bei dem das Auftreten von Scums schon in geringem Abstand hinter dem Bandanfang minimiert war.

Im beigefügten Diagramm "Diag. 1" sind die für die in den Betriebsversuchen V und E1 bis E4 erzeugten Warmbänder ermittelten Scum-Indizes über die Bandlänge aufgetragen worden. Es zeigt sich, dass im Bereich des Bandanfangs bis zu 90 % der untersuchten Warmbänder im betreffenden Längenabschnitt Scums aufweisen. Bei den im zum Vergleich gefahrenen Betriebsversuch V erzeugten Warmbändern wiesen immer noch bis zu 70 % der Bänder im Bereich ihres dem Bandende zugeordneten Längenabschnitts Scums auf.

Weiter ergibt Diag. 1, dass durch die im ersten Betriebsversuch E1 angewendete einfachste Variante der erfindungsgemäßen Vorgehensweise schon in relativ kurzem Abstand vom Bandanfang eine deutliche Verminderung der Menge an Oxideinschlüssen aufweisenden Bändern festgestellt werden konnte. So wiesen nach ca. 1000 Metern nur noch 70 % der untersuchten Bänder im betreffenden Längenabschnitt Scums auf, während dies bei den konventionell erzeugten Bändern erst nach 3000 Metern im Bereich des Bandendes erreicht wurde. Dort wiesen nur noch 47 % der untersuchten Bänder die an sich unerwünschten Einschlüsse auf.

Noch stärker ist der Abfall des Scums aufweisenden Anteils bei den Bändern, die im dritten Betriebsversuch E2 erfindungsgemäß erzeugt worden sind. Es zeigt sich, dass durch Abdeckung der Stahlschmelze mit der MgO-freien Schlackenlage Ks und die zusätzliche Freisetzung von reduzierendem Gas im Innenraum I der Verteilerrinne 1 der Anteil der Bänder, die auch im Bereich ihres Endes noch Scums aufweisen, auf bis zu 30 % reduziert werden konnte.

Schließlich macht Diag. 1 deutlich, dass, wie im vierten Betriebsversuch geschehen, bei Anwendung aller gemäß der Erfindung vorgeschlagenen Maßnahmen zur Vermeidung eines Kontaktes der in der Verteilerrinne 1 enthaltenen Stahlschmelze S mit dem Umgebungssauerstoff die Anzahl der die unerwünschten Einschlüsse aufweisenden Bänder ausgehend vom hohen Wert am Bandanfang sehr steil abfällt mit der Folge, dass in einem Abstand von 1000 Metern vom Bandanfang nur noch ca. 25 % der Bänder Scums aufweisen. Für den Bereich des Bandendes ist dieser Anteil auf nur noch 10 % gesenkt.

Bei optimierten Verhältnissen lassen sich Bänder erzeugen, bei denen die Anzahl der in Rede stehenden Oxideinschlüsse aufweisenden Längsabschnitte schon nach 1400 Metern auf bis zu 0 % abgesenkt ist. Ein Beispiel für ein solches Band ist in Diag. 1 als erfindungsgemäßes Beispiel Eopt gekennzeichnet.

Bei erfindungsgemäßer Vorgehensweise lässt sich somit ein gegossenes Warmband erzeugen, dass schon in kurzem Abstand zum Bandanfang höchsten Qualitätsansprüchen genügt. Durch die Beachtung der erfindungsgemäßen Vorschriften lässt sich somit die Ausbeute an hochwertigen Produkten deutlich gegenüber der konventionellen Arbeitsweise steigern.

Dabei lassen sich die Erfolge der Erfindung nicht nur im Zusammenhang mit der Herstellung von Warmband über den Weg der Erzeugung von gegossenem Band nutzen, sondern sie stellen sich auch dann ein, wenn ein solches Produkt beispielsweise aus einer Dünnbramme erzeugt wird.

**Patentansprüche**

1.    Verfahren zum Vergießen einer Stahlschmelze (S)

   -    bei dem die Stahlschmelze (S) in ein Verteilergefäß (1) eingegossen wird, und

   -    bei dem auf der Stahlschmelze (S) nach dem Eingießen eine Schlacke (K) erzeugt wird, die eine schmelzflüssige Schlackenlage (Ks) umfasst, die aus einem bei niedriger Temperatur schmelzenden, im Wesentlichen MgO-freien Schlackenbildnermaterial gebildet ist.

2.    Verfahren nach Anspruch 1, **dadurch gekennzeichnet, dass** das Schlackenbildnermaterial im Wesentlichen aus CaO und/oder $Al_2O_3$, jeweils alleine oder als Mischung verwendet, besteht.

3.    Verfahren nach einem der voranstehenden Ansprüche, **dadurch gekennzeichnet, dass** eine Isolierlage (Ki) der Schlacke (K) erzeugt wird, indem auf die schmelzflüssige Schlackenlage (Ks) ein wärmedämmendes Material aufgebracht wird.

4.    Verfahren nach Anspruch 3, **dadurch gekennzeichnet, dass** das wärmedämmende Material Reisasche ist.

5.    Verfahren nach einem der voranstehenden Ansprüche, **dadurch gekennzeichnet, dass** im freien Raum (I) oberhalb der Schlacke eine $O_2$reduzierende Atmosphäre erzeugt wird.

6.    Verfahren nach Anspruch 5, **dadurch gekennzeichnet, dass** die $O_2$reduzierende Atmosphäre durch Aufbringen eines Materials auf die Schlacke bzw. die Isolierschicht erzeugt wird, welches infolge der Erwärmung ein reduzierendes Gas freisetzt.

7.    Verfahren nach Anspruch 6, **dadurch gekennzeichnet, dass** das Material Graphit ist.

8.    Verfahren nach einem der Ansprüche 5 bis 7, **dadurch gekennzeichnet, dass** in den freien Raum (I) oberhalb der Schlacke (S) ein $O_2$-reduzierendes Gas geleitet wird.

9.    Verfahren nach Anspruch 8, **dadurch gekennzeichnet, dass** das Gas $CH_4$ und / oder $H_2$ ist.

10.    Verfahren nach einem der voranstehenden Ansprüche, **dadurch gekennzeichnet, dass** in den freien Raum (I) oberhalb der Schlacke ein inertes Gas geleitet wird.

11.    Verfahren nach Anspruch 10, **dadurch gekennzeichnet, dass** das inerte Gas Argon ist.

12.    Schlackenbildnermaterial im Wesentlichen bestehend aus CaO und $Al_2O_3$ unter weitestgehendem Ausschluss von MgO.

# Diag. 1

| | **Europäisches** | **EUROPÄISCHER RECHERCHENBERICHT** | **Nummer der Anmeldung** |
| | **Patentamt** | | **EP 03 01 6365** |

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 202 692 A (CARINI GEORGE F) 13. Mai 1980 (1980-05-13) * das ganze Dokument * --- | 1,12 | B22D11/111 C21C7/076 |
| A | FR 2 674 156 A (DAUSSAN & CO) 25. September 1992 (1992-09-25) * Seite 4, Zeile 12 - Seite 8, Zeile 21; Abbildungen 1-3 * --- | 3 | |
| A | DE 41 03 798 C (MAX PLANCK INSTITUT FÜR EISENFORSCHUNG) 11. Juni 1992 (1992-06-11) * Tabelle 1 * --- | 2 | |
| A | EP 0 055 953 A (DAUSSAN & CO) 14. Juli 1982 (1982-07-14) * Anspruch 2 * --- | 4 | |
| A | GB 2 265 564 A (FOSECO INT) 6. Oktober 1993 (1993-10-06) * Zusammenfassung; Ansprüche 2-5 * ----- | 6,7 | **RECHERCHIERTE SACHGEBIETE (Int.Cl.7)** B22D C21C |

Der vorliegende Recherchenbericht wurde für alle Patentansprüche erstellt

| Recherchenort | Abschlußdatum der Recherche | Prüfer |
|---|---|---|
| DEN HAAG | 10. Dezember 2003 | Mailliard, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**          EP 03 01 6365

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-12-2003

| Im Recherchenbericht angeführtes Patentdokument | | Datum der Veröffentlichung | Mitglied(er) der Patentfamilie | | Datum der Veröffentlichung |
|---|---|---|---|---|---|
| US 4202692 | A | 13-05-1980 | KEINE | | |
| FR 2674156 | A | 25-09-1992 | FR | 2674156 A1 | 25-09-1992 |
|  |  |  | US | 5332418 A | 26-07-1994 |
| DE 4103798 | C | 11-06-1992 | DE | 4103798 C1 | 11-06-1992 |
|  |  |  | AU | 1204092 A | 07-09-1992 |
|  |  |  | CA | 2079670 A1 | 09-08-1992 |
|  |  |  | WO | 9213661 A1 | 20-08-1992 |
|  |  |  | EP | 0524291 A1 | 27-01-1993 |
|  |  |  | JP | 5507239 T | 21-10-1993 |
|  |  |  | US | 5782956 A | 21-07-1998 |
| EP 0055953 | A | 14-07-1982 | FR | 2496696 A1 | 25-06-1982 |
|  |  |  | EP | 0055953 A1 | 14-07-1982 |
| GB 2265564 | A | 06-10-1993 | KEINE | | |

EPO FORM P0461

Für nähere Einzelheiten zu diesem Anhang : siehe Amtsblatt des Europäischen Patentamts, Nr.12/82